(19) Europäisches Patentamt / European Patent Office / Office européen des brevets

(11) **EP 4 614 280 A1**

(12) **EUROPEAN PATENT APPLICATION**
published in accordance with Art. 153(4) EPC

(43) Date of publication:
**10.09.2025 Bulletin 2025/37**

(21) Application number: **24813771.3**

(22) Date of filing: **29.02.2024**

(51) International Patent Classification (IPC):
**G06F 1/324** (2019.01)     **G06F 1/3293** (2019.01)
**G06F 1/3206** (2019.01)     **G06F 1/329** (2019.01)
**G06F 9/50** (2006.01)       **G06F 11/34** (2006.01)
**G06F 1/3234** (2019.01)     G06F 9/48 (2006.01)

(52) Cooperative Patent Classification (CPC):
**G06F 1/324; G06F 1/3206; G06F 1/3234;
G06F 1/3243; G06F 1/329; G06F 1/3293;
G06F 11/3433; G06F 11/3442;** G06F 9/4893;
Y02D 10/00

(86) International application number:
**PCT/CN2024/079184**

(87) International publication number:
**WO 2024/244565 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023 CN 202310619203**

(71) Applicant: **Honor Device Co., Ltd.
Shenzhen, Guangdong 518040 (CN)**

(72) Inventors:
• **LI, Yaozong
  Shenzhen, Guangdong 518040 (CN)**
• **LIU, Wenfang
  Shenzhen, Guangdong 518040 (CN)**
• **YAN, Zhe
  Shenzhen, Guangdong 518040 (CN)**

(74) Representative: **Goddar, Heinz J.
Boehmert & Boehmert
Anwaltspartnerschaft mbB
Pettenkoferstrasse 22
80336 München (DE)**

(54) **CPU CLOCK SPEED PROCESSING METHOD AND ELECTRONIC DEVICE**

(57)     This application provides a method for processing a CPU frequency and an electronic device. The method includes: running, by an electronic device, at a first CPU frequency when N tasks run in a foreground, where N is an integer greater than 1; switching, by the electronic device, M tasks in the N tasks to a background for running, where M is an integer greater than 0 and less than N; and running, by the electronic device, at a second CPU frequency in a mixed task running scenario in which the M tasks run in the background and N-M tasks run in the foreground, where the second CPU frequency is less than the first CPU frequency. In embodiments of this application, power consumption of the electronic device can be reduced.

FIG. 9

EP 4 614 280 A1

## Description

This application claims priority to Chinese Patent Application 202310619203.8, filed with the China National Intellectual Property Administration on May 29, 2023 and entitled "METHOD FOR PROCESSING CPU FREQUENCY AND ELECTRONIC DEVICE", which is incorporated herein by reference in its entirety.

## TECHNICAL FIELD

Embodiments of this application relate to the field of terminal technologies, and in particular, to a method for processing a CPU frequency and an electronic device.

## BACKGROUND

With the advancement of terminal technologies, various electronic devices emerge. The electronic devices have gradually become necessities in human daily life and work. However, the power consumption of the electronic devices has always been prominent, and has not been well resolved. Therefore, how to reduce the power consumption of the electronic devices is an urgent problem that needs to be resolved by a person skilled in the art.

## SUMMARY

Embodiments of this application provide a method for processing a CPU frequency and an electronic device, to reduce power consumption of the electronic device.

According to a first aspect, an embodiment of this application provides a method for processing a CPU frequency. The method includes:

an electronic device runs at a first CPU frequency when N tasks run in a foreground, where N is an integer greater than 1;

the electronic device switches M tasks in the N tasks to a background for running, where M is an integer greater than 0 and less than N; and

the electronic device runs at a second CPU frequency in a mixed task running scenario in which the M tasks run in the background and N-M tasks run in the foreground, where the second CPU frequency is less than the first CPU frequency.

Optionally, that an electronic device runs N tasks in a foreground includes: the electronic device displays a user interface of the N tasks on a display in a split screen manner or a floating window manner.

In the above solution, considering that requirements for the CPU frequency are different when the electronic device runs a task in the foreground and in the background, that is, real-time input requests of a user need to be responded in time when the task runs in the foreground, performance requirements such as a response delay and a frame rate are high. That is, requirements for the CPU frequency are high. When the task runs in the background, performance requirements are low. That is, requirements for the CPU frequency are low. Therefore, after being switched from the foreground to the background for running, the task may run at a low CPU running frequency, to reduce power consumption.

In a possible implementation, in the mixed task running scenario in which the M tasks run in the background and the N-M tasks run in the foreground, the method further includes:

the electronic device obtains first grouping information of each task and a first load of each task in the N tasks, where the N-M tasks belong to a first group, the M tasks belong to a second group, a task included in the first group is a task running in the foreground, and a task included in the second group is a task running in the background;

the electronic device calculates a CPU load based on the first grouping information of each task and the first load of each task, to obtain a first CPU load; and

the electronic device determines the second CPU frequency based on the first CPU load.

In the above solution, because a group to which the task running in the foreground belongs is different from a group to which the task running in the background belongs, the task running in the foreground may be distinguished from the task running in the background based on the grouping information, thereby calculating the CPU load based on the different group and a specific task. In other words, the CPU load is calculated by taking into account the grouping of the task, that is, calculated by taking into account the running of the task in the foreground and the running of the task in the background. This enables a CPU frequency obtained by performing frequency regulation based on the CPU load obtained through calculation to match an actual running task. That is, power consumption can be reduced as much as possible while performance requirements for the task are met.

In a possible implementation, that the electronic device calculates a CPU load based on the first grouping information of each task and the first load of each task in the N tasks, to obtain a first CPU load includes:

the electronic device obtains a load impact factor of each task based on the first grouping information of each task, where each group corresponds to one load impact factor, and each task corresponds to a load impact factor of a group to which each task belongs; and

the electronic device calculates the first CPU load based on the load impact factor of each task and the first load of each task.

In the above solution, a task group may be used as a granularity for weighing a load of a task in a corresponding group by setting a corresponding load impact factor for each group. Because different load impact factors corresponding to different groups, an appropriate CPU load may be better calculated.

In a possible implementation, after the electronic device runs at a second CPU frequency in a mixed task running scenario in which the M tasks run in a background and N-M tasks run in the foreground, the method further includes:

the electronic device obtains a first response delay and/or first power consumption of the electronic device; and

if the first response delay and/or the first power consumption do/does not meet a requirement for a preset quality of service QoS specification, the electronic device re-determines a CPU frequency, to obtain a third CPU frequency.

In the above solution, requirements for the preset QoS specification of the electronic device may further be met in a frequency regulation process in the mixed task running scenario of the task running in the foreground and the task running in the background. If the requirements for the preset QoS specification of the electronic device are not met, frequency regulation may be performed again until the requirements for the preset QoS specification of the electronic device are met. Therefore, the performance requirements for the task are met while power consumption is reduced. This improves user experience.

In a possible implementation, that the electronic device re-determines a CPU frequency, to obtain a third CPU frequency includes:

the electronic device obtains second grouping information of each task and a second load of each task in the N tasks, where the N-M tasks belong to the first group, the M tasks belong to the second group, the task included in the first group is the task running in the foreground, the task included in the second group is the task running in the background, each group corresponds to the one load impact factor, and each task in the N tasks corresponds to the load impact factor of the group to which each task belongs;

the electronic device adjusts the load impact factor corresponding to the first group and/or the second group;

the electronic device obtains an adjusted load impact factor of each task based on the second grouping information of each task;

the electronic device calculates the CPU load based on the adjusted load impact factor of each task and the second load of each task, to obtain a second CPU load; and

the electronic device determines the third CPU frequency based on the second CPU load.

In the above solution, if the requirements for the preset QoS specification that are set for the response delay and/or power consumption are/is not met, the CPU load may be recalculated based on the adjusted load impact factor by re-obtaining the grouping information of the task and the load of the task and adjusting a load impact factor of a group to which a currently running task belongs, and frequency regulation is performed again based on the CPU load obtained through recalculation, thereby implementing optimization and balance of performance and power consumption.

In a possible implementation, if the first response delay is greater than a response delay required by the QoS specification, the electronic device specifically performs the following operations:

the electronic device increases the load impact factor corresponding to the first group and/or the second group;

the electronic device obtains an increased load impact factor of each task based on the second grouping information of each task;

the electronic device calculates the second CPU load based on the increased load impact factor of each task and the second load of each task; and

the electronic device determines the third CPU frequency based on the second CPU load, where the third CPU frequency is greater than the second CPU frequency and less than the first CPU frequency.

In the above solution, if an actual response delay exceeds a response delay required by the preset QoS specification, it indicates that a CPU running frequency is low. As a result, performance requirements for a service are not met. In this case, the load impact factor corresponding to the group to which the currently running task belongs may adaptively increase. Then, a CPU load output is recalculated based on the increased impact factor. The CPU load through recalculation is input to a CPU frequency governor for performing frequency regulation, to obtain the adjusted CPU running frequency. Because the impact factor increases, the CPU load obtained through calculation increases, resulting in an increase of the CPU running frequency obtained by performing frequency regulation again. Then, a task in the electronic device runs at the increased CPU running frequency. Due to the increase of the CPU running frequency, the response delay of the service may increase, to meet the performance requirements for the service.

In a possible implementation, if the first power consumption is greater than power consumption required by the QoS specification, the electronic device specifically performs the following operations:

the electronic device reduces the load impact factor corresponding to the first group and/or the second group;
the electronic device obtains a reduced load impact factor of each task based on the second grouping information of each task;
the electronic device calculates the second CPU load based on the reduced load impact factor of each task and the second load of each task; and
the electronic device determines the third CPU frequency based on the second CPU load, where the third CPU frequency is less than the second CPU frequency.

In a possible implementation, when the first power consumption is greater than the power consumption required by the QoS specification and the first response delay satisfies a response delay required by the QoS specification, the electronic device reduces the load impact factor corresponding to the first group and/or the second group.

In the above solution, if the response delay required by the preset QoS specification is satisfied but the actual power consumption exceeds the power consumption required by the preset QoS specification, it indicates that the CPU running frequency is excessively high, resulting in a waste of power consumption. In this case, the impact factor corresponding to the group to which the currently running task belongs may be adaptively reduced. Then, the CPU load output is recalculated based on the reduced impact factor. The CPU load obtained through calculation may be input to a CPU frequency governor for performing frequency regulation, to obtain the adjusted CPU running frequency. Because the impact factor is reduced, the CPU load obtained through calculation is reduced, resulting in reduction of the CPU running frequency obtained by performing frequency regulation again. Then, a task in the electronic device runs at the reduced CPU running frequency. Because the CPU running frequency is reduced, power consumption is reduced, and a waste of power consumption is reduced.

In a possible implementation, the load impact factor corresponding to the second group is less than the load impact factor corresponding to the first group.

In the above solution, because the performance requirements for the task running in the background are lower compared to the performance requirements for the task running in the foreground, the load impact factor corresponding to the group to which the task running in the background belongs may be less than the load impact factor corresponding to the group to which the task running in the foreground belongs, to simply and effectively calculate the appropriate CPU load. Therefore, the appropriate CPU running frequency is obtained, to reduce power consumption.

According to a second aspect, an embodiment of this application provides an electronic device. The electronic device includes: one or more processors and a memory. The memory is coupled to the one or more processors, the memory is configured to store computer program code, the computer program code includes computer instructions, and the one or more processors invoke the computer instructions to enable the electronic device to perform: running at a first CPU frequency when N tasks run in a foreground, where N is an integer greater than 1; switching M tasks in the N tasks to a background for running, where M is an integer greater than 0 and less than N; and running at a second CPU frequency in a mixed task running scenario in which the M tasks run in the background and N-M tasks run in the foreground, where the second CPU frequency is less than the first CPU frequency.

Optionally, that an electronic device runs N tasks runs in a foreground includes: The electronic device displays a user interface of the N tasks on a display in a split screen manner or a floating window manner.

In a possible implementation, in the mixed task running scenario in which the M tasks run in the background and the N-M tasks run in the foreground, the one or more processors are further configured to invoke the computer instructions to enable the electronic device to perform: obtaining first grouping information of each task and a first load of each task in the N tasks, where the N-M tasks belong to a first group, the M tasks belong to a second group, a task included in the first group is a task running in the foreground, and a task included in the second group is a task running in the background; calculating a CPU load based on the first grouping information of each task and the first load of each task, to obtain a first CPU load; and determining the second CPU frequency based on the first CPU load.

In a possible implementation, the one or more processors are configured to invoke the computer instructions to enable the electronic device to specifically perform: obtaining a load impact factor of each task based on the first grouping information of each task, where each group corresponds to one load impact factor, and each task corresponds to a load impact factor of a group to which each task belongs; and calculating the first CPU load based on the load impact factor of each task and the first load of each task.

In a possible implementation, after the running at a second CPU frequency in a mixed task running scenario in which the M tasks run in the background and N-M tasks run in the foreground, the one or more processors are further configured to invoke the computer instructions to enable the electronic device to perform: obtaining a first response delay and/or first power consumption of the electronic device; and if the first response delay and/or the first power consumption do/does not meet a requirement for a preset quality of service QoS specification, re-determining a CPU frequency, to obtain a third CPU frequency.

In a possible implementation, the one or more processors are configured to invoke the computer instructions to enable the electronic device to specifically perform: obtaining second grouping information of each task and a second load of each task in the N tasks, where the N-M tasks belong to the first group, the M tasks belong to the second group, the task included in the first group is the task running in the foreground, the task included in the second group is the task running in the background, each group corresponds to the one load impact factor, and each task in the N tasks corresponds to the load impact factor of the group to which each task belongs; adjusting the load impact factor corresponding to the first group and/or the second group; obtaining the adjusted load impact factor of each task based on the second grouping information of each task; calculating the CPU load based on the adjusted load impact factor of each task and the second load of each task, to obtain a second CPU load; and determining the third CPU frequency based on the second CPU load.

In a possible implementation, if the first response delay is greater than a response delay required by the QoS specification, the one or more processors are configured to invoke the computer instructions to enable the electronic device to specifically perform: increasing the load impact factor corresponding to the first group and/or the second group; obtaining an increased load impact factor of each task based on the second grouping information of each task; calculating the second CPU load based on the increased load impact factor of each task and the second load of each task; and determining the third CPU frequency based on the second CPU load, where the third CPU frequency is greater than the second CPU frequency and less than the first CPU frequency.

In a possible implementation, if the first power consumption is greater than power consumption required by the QoS specification, the one or more processors are configured to invoke the computer instructions to enable the electronic device to specifically perform: reducing the load impact factor corresponding to the first group and/or the second group; obtaining a reduced load impact factor of each task based on the second grouping information of each task; calculating the second CPU load based on the reduced load impact factor of each task and the second load of each task; and determining the third CPU frequency based on the second CPU load, where the third CPU frequency is less than the second CPU frequency.

Optionally, when the first power consumption is greater than the power consumption required by the QoS specification and the first response delay satisfies a response delay required by the QoS specification, the one or more processors are configured to invoke the computer instructions to enable the electronic device to specifically perform: reducing the load impact factor corresponding to the first group and/or the second group.

Optionally, the load impact factor corresponding to the second group is less than the load impact factor corresponding to the first group.

According to a third aspect, an embodiment of this application provides an electronic device, including: a touch control screen, a camera lens, one or more processors, and one or more memories. The one or more processors are coupled to the touch control screen, the camera lens, and the one or more memories. The one or more memories are configured to store computer program code, and the computer program code includes computer instructions. When the one or more processors execute the computer instructions, the electronic device is enabled to perform the method according to any one of the first aspect or the possible implementations of the first aspect.

According to a fourth aspect, an embodiment of this application provides a chip system. The chip system is used in an electronic device, and the chip system includes one or more processors. The one or more processors are configured to invoke computer instructions to enable the electronic device to perform the method according to any one of the first aspect or the possible implementations of the first aspect.

According to a fifth aspect, an embodiment of this application provides a computer program product including instructions. When the computer program product is run on an electronic device, the electronic device is enabled to perform the method according to any one of the first aspect or the possible implementations of the first aspect.

According to a sixth aspect, an embodiment of this application provides a computer-readable storage medium including instructions. When the computer instructions are run on an electronic device, the electronic device is enabled to perform the method according to any one of the first aspect or the possible implementations of the first aspect.

The second aspect to the sixth aspect are used to implement the method according to any one of the first aspect and the possible implementations of the first aspect. Therefore, the second aspect to the sixth aspect have beneficial effect corresponding to that in the first aspect and the possible implementations of the first aspect. Details are not described herein again.

**BRIEF DESCRIPTION OF DRAWINGS**

FIG. 1 is a schematic diagram of a hardware structure of an electronic device according to an embodiment of this application;

FIG. 2 is a schematic diagram of a process of a method according to an embodiment of this application;

FIG. 3 is a schematic diagram of a process of calculation of a CPU load according to an embodiment of this application;

FIG. 4 is a schematic diagram of a mixed task running scenario according to an embodiment of this application;

FIG. 5 is a schematic diagram of modules to implement a method according to an embodiment of this application;

FIG. 6 is a schematic diagram of a software structure of an electronic device according to an embodiment of this application;

FIG. 6A is a schematic diagram of a software architecture of a frequency regulation module according to an embodiment of this application;

FIG. 7 is a schematic diagram of a process of module interaction according to an embodiment of this application;

FIG. 8 is a schematic diagram of a change in a CPU load according to an embodiment of this application;

FIG. 9 is a schematic diagram of a change in a CPU frequency according to an embodiment of this application;

FIG. 10 to FIG. 12 are a schematic diagram of a user interface according to an embodiment of this application; and

FIG. 13 is a schematic diagram of another change in a CPU frequency according to an embodiment of this application.

**DESCRIPTION OF EMBODIMENTS**

The following describes technical solutions in embodiments of this application with reference to the accompanying drawings. In descriptions of the embodiments of this application, unless otherwise stated, "/" indicates a meaning of "or". For example, A/B may indicate A or B. "And/Or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

In the following, the terms "first" and "second" are only used for description purposes, and cannot be understood as indicating or implying relative importance or implicitly indicating a quantity of indicated technical features. Therefore, a feature defined with "first" or "second" may explicitly or implicitly include one or more features. In the descriptions of embodiments of this application, unless otherwise stated, "a plurality of" means two or more than two.

The term "user interface (user interface, UI)" in the following embodiments of this application is a medium interface, used for interaction and information exchange between an application or an operating system and a user. The user interface converts an internal form of information into a form acceptable to a user. The user interface is source code written in a specific computer language such as Java or an extensible markup language (extensible markup language, XML). Interface source code is parsed and rendered on an electronic device, and is finally presented as content that can be recognized by the user. A common representation form of the user interface is a graphical user interface (graphic user interface, GUI), which is a graphically displayed user interface related to a computer operation. The user interface may be a visual interface element displayed on the display of the electronic device, such as a text, an icon, a button, a menu, a tab, a text box, a dialog box, a status bar, a navigation bar, and a Widget.

Only parts related to this application are shown in the accompanying drawings, rather than all content. Before discussing the example embodiments in more detail, it should be noted that some of the example embodiments are described as processes or methods depicted as flowcharts. Although the flowchart describes operations (or steps) as a sequential process, a plurality of operations may be performed in parallel, concurrently, or simultaneously. In addition, an order of the operations may be rearranged. The process may be ended when operations of the process are completed, but may also have additional steps not included in the figure. The process may correspond to a method, a function, a procedure, a subroutine, a subprogram, and the like.

First, technical terms involved in embodiments of this application are described as follows.

1. Process (process).

A process is a running activity of a computer program on a data set. As a basic unit for resource allocation, the process is the basis of a structure of an operating system. In a contemporary thread-oriented computer architecture, the process is a container for a thread. A program is description of instructions, data, and organization of the data, and the process is an entity of the program.

2. Thread (thread).

A thread is the smallest unit of processing that can be scheduled in an operating system. The thread is included in the process, and is an actual operation unit in the process. One thread means a control flow in a single sequence in the process. Multiple threads can be concurrent in a process, and each thread performs a different task.

3. Task.

For example, a task described in embodiments of this application is a task performed by one thread. For example, an application runs through a process, one process may include one or more threads, and each thread performs different tasks. Therefore, one or more tasks may be performed during running of one application.

In another possible implementation, one task described in embodiments of this application may be a task performed by one application process, or a task obtained through division based on granularity. This is not limited in embodiments of this application. For ease of subsequent description, an example in which a task is a task performed by a thread is used for description in embodiments of this application. In embodiments of this application, the task may also be referred to as a task scenario. The task is equivalent to the task scenario.

4. Run in a foreground.

For example, in embodiments of this application, if a task (or an application) is running and a user interface of the task (or the application) is displayed on a display, it means the task (or the application) runs in a foreground. Alternatively, the task (or the application) is a task (or an application) running in the foreground. For example, a mobile phone is used as an example. If a user interface in which a video application plays back a video is displayed on a display of the mobile phone, a video playback task of the video application runs in the foreground.

5. Run in a background.

For example, in embodiments of this application, if a task (or an application) is running and a user interface of the task (or the application) is not displayed on a display, it means the task (or the application) runs in a background. Alternatively, the task (or the application) is a task (or an application) running in the background. For example, a mobile phone is used as an example. If the mobile phone is performing a download task and a user interface of the download task is not shown on the display, the download task runs in the background.

When the electronic device is used, a plurality of tasks often run at the same time. The plurality of tasks include a mixed task scenario in which a task runs in the foreground and a task runs in the background, for example, a mixed task scenario in which a navigation task runs in the background while a video playback task runs in the foreground; or a mixed task scenario in which a download task runs in the background while an interface sliding task runs in the foreground. In the composite scenarios, a system has high power consumption, generates heat seriously, and may have performance freezes. However, there are no good measures to resolve the above problems. In view of this, embodiments of this application provide a method for processing a CPU frequency, and an electronic device to perform the method for processing a CPU frequency.

The following describes the electronic device provided in embodiments of this application as an example. The electronic device in embodiments of this application may include a handheld device (for example, a mobile phone, a tablet computer, or a notebook computer), a vehicle-mounted device (for example, an automobile, an electric vehicle, an aircraft, or a ship), a wearable device (for example, a smartwatch (for example, an iWatch), a smart band, or a pedometer), a smart home device (for example, a refrigerator, a television, an air conditioner, or an electricity meter), an intelligent robot, a workshop device, or various forms of user equipment (User Equipment, UE), mobile stations (Mobile station, MS), or terminal equipment (Terminal Equipment), and the like. Generally, the electronic device supports a plurality of applications such as a camera application, a word processing application, a phone application, an email application, an instant message application, a photo management application, a web browsing application, a digital music player application, and/or digital video player application. It should be understood that, this is merely an example herein, and a specific form and an implementation of the electronic device are not limited in embodiments of this application.

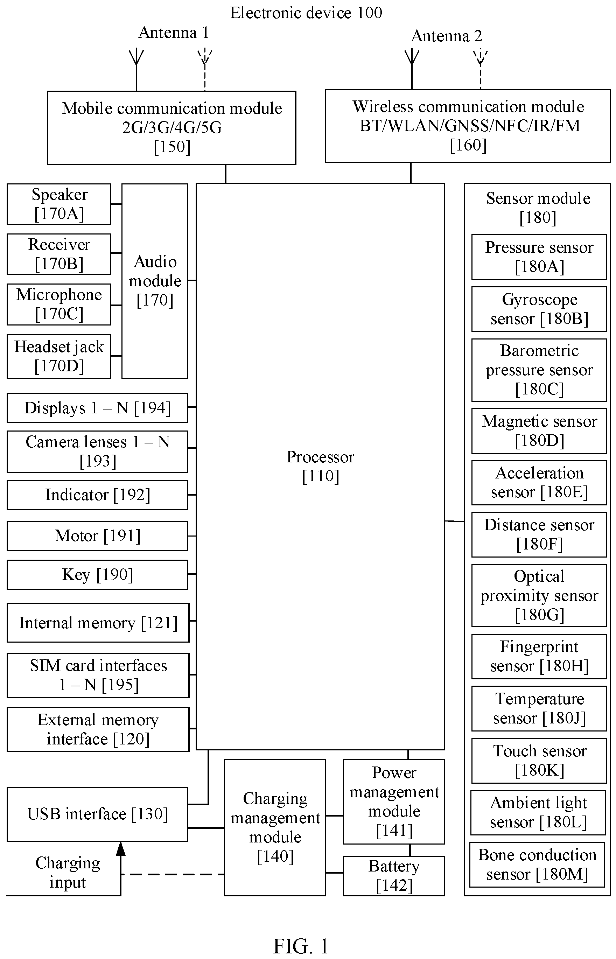

For example, FIG. 1 is a schematic diagram of a hardware structure of an electronic device 100.

This embodiment is described in detail below by using the electronic device 100 as an example. It should be understood that the electronic device 100 may have more or fewer components than those shown in the figure, may combine two or more components, or may have a different component configuration. Components shown in the figure may be implemented by hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera lens 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store an instruction and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be coupled to the touch sensor 180K, a charger, a flashlight, the camera lens 193, and the like by using different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transfer an audio signal to the wireless communication module 160 by using the I2S interface, to implement a function of answering a call by using a Bluetooth headset.

The PCM interface may also be configured for audio communication, to sample, quantize, and encode an analog signal. In some embodiments, the audio module 170 and the wireless communication module 160 may be coupled through a PCM bus interface. In some embodiments, the audio module 170 may also transmit an audio signal to the wireless communication module 160 through the PCM interface, to implement the function of answering a call through the Bluetooth headset. Both the I2S interface and the PCM interface may be configured to perform audio communication.

The UART interface is a universal serial data bus used for asynchronous communication. The bus may be a two-way communication bus. The bus converts data to be transmitted between serial communication and parallel communication. In some embodiments, the UART interface is generally configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 via the UART interface, to implement a function of music playback by using a Bluetooth headset.

The MIPI interface may be configured to connect the processor 110 to a peripheral device such as the display 194 or the camera lens 193. The MIPI interface includes a camera serial interface (camera serial interface, CSI), a display serial interface (display serial interface, DSI), and the like. In some embodiments, the processor 110 communicates with the camera lens 193 through the CSI interface, to implement a shooting function of the electronic device 100. The processor 110 communicates with the display 194 through the DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera lens 193, the display 194, the wireless communication module 160, the audio module 170, the sensor module 180, and the like. The GPIO interface may be further configured as the I2C interface, the I2S interface, the UART interface, the MIPI interface, or the like.

The SIM card interface may be configured to communicate with the SIM card interface 195, to implement a function of transmitting data to a SIM card or reading data from a SIM card.

The USB interface 130 is an interface that complies with a USB standard specification, and may be specifically a mini USB interface, a micro USB interface, a USB Type-C interface, or the like. The USB interface 130 may be configured to connect to a charger to charge the electronic device 100, or may be used for data transmission between the electronic device 100 and a peripheral device. The interface may alternatively be configured to connect to a headset, to play audio through the headset. The interface may be further configured to be connected to another electronic device such as an AR device.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera lens 193, the wireless communication module 160, and the like.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed to improve utilization of the antennas. For example, the antenna 1 may be multiplexed as a diversity antenna of a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, and the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), infrared (infrared, IR), or other wireless communication solutions to be applied to the electronic device 100. The wireless communication module 160 may be one or more components

EP 4 614 280 A1

integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR, and/or other technologies. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing and is connected to the display 194 and the application processor. The GPU is configured to perform mathematical and geometric calculations and graphics rendering. The processor 110 may include one or more GPUs, and the GPU executes program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diode, QLED), or the like. In some embodiments, the electronic device 100 may include 1 or N displays 194, where N is a positive integer greater than 1.

The electronic device 100 may implement a shooting function through the ISP, the camera lens 193, the video encoder and decoder, the GPU, the display 194, the application processor, and the like.

The ISP is configured to handle data returned by the camera lens 193. For example, during photographing, a shutter is pressed, and light is transmitted to a photosensitive element of the camera lens through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise and brightness of the image. The ISP may further optimize parameters such as exposure and a color temperature of a shooting scenario. In some embodiments, the ISP may be provided in the camera lens 193.

The camera lens 193 is configured to capture a still image or a video. An optical image of an object is generated through the lens, and is projected onto the photosensitive element. The photosensitive element may be a charge coupled device (charge coupled device, CCD), or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include 1 or N camera lenses 193. N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video encoder and decoder are configured to compress or decompress a digital video. The electronic device 100 may support one or more types of video encoders and decoders. In this way, the electronic device 100 may play or record videos in a plurality of encoding formats, for example, a moving picture experts group (moving picture experts group, MPEG)1, MPEG2, MPEG3, and MPEG4.

The NPU is a neural-network (neural-network, NN) computing processor. The NPU quickly processes input information with reference to a structure of a biological neural network, for example, a transfer mode between human brain neurons, and may further continuously perform self-learning. The NPU may be used to implement an application such as intelligent cognition of the electronic device 100, for example, image recognition, facial recognition, voice recognition, and text understanding.

The external memory interface 120 may be configured to be connected to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a facial recognition function, a fingerprint recognition function, and a mobile payment function), and the like. The data storage area may store data (for example, facial information template data and a fingerprint information template) and the like created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function by using the audio module 170, the speaker 170A, the receiver 170B, the microphone 170C, the headset jack 170D, the application processor, and the like, such as music playing or sound recording.

The audio module 170 is configured to convert digital audio information into analog audio signal output, and is further configured to convert analog audio input into a digital audio signal. The audio module 170 may be further configured to code and decode an audio signal. In some embodiments, the audio module 170 may be disposed in the processor 110, or some functional modules in the audio module 170 may be disposed in the processor 110.

In this embodiment of this application, the electronic device may play an audio signal by using a speaker unit. The speaker unit may be the speaker 170A, the receiver 170B, or an external device connected to the electronic device, for example, earphones and glasses, which is not limited herein.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as "earpiece", is configured to convert an electrical audio signal into a sound signal. When the electronic device 100 is configured to answer a call or receive speech information, the receiver 170B may be put close to a human ear to answer speech.

The microphone 170C, also referred to as a "voice tube" or a "mike", is configured to convert a sound signal into an electrical signal. When making a call or sending speech information, a user may make a sound approaching the microphone 170C through the mouth, to input a sound signal into the microphone 170C. At least one microphone 170C may be arranged in the electronic device 100. In some other embodiments, two microphones 170C may be disposed in the electronic device 100, to acquire a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be arranged at the display 194. Many types of pressure sensors 180A such as a resistive pressure sensor, an inductive pressure sensor, and a capacitive pressure sensor exist. The capacitive pressure sensor may include at least two parallel plates made of conductive materials. When force is applied onto the pressure sensor 180A, a capacitance between electrodes changes. The electronic device 100 determines intensity of the pressure based on the change in the capacitance. When a touch operation is performed on the display 194, the electronic device 100 detects intensity of the touch operation based on the pressure sensor 180A. The electronic device 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on a short message application icon, an instruction for viewing a short message is performed. When a touch operation whose touch operation intensity is greater than or equal to the first pressure threshold is performed on the short message application icon, an instruction for creating a new short message is performed.

The gyroscope sensor 180B may be configured to determine a motion posture of the electronic device 100. In some embodiments, angular velocities of the electronic device 100 around three axes (which are x, y, and z axes) may be determined by using the gyroscope sensor 180B. The gyroscope sensor 180B may be configured to image stabilization during photographing. For example, when the shutter is pressed, the gyroscope sensor 180B detects an angle at which the electronic device 100 jitters, and calculates, based on the angle, a distance for which a lens module needs to compensate, and allows the lens to cancel the jitter of the electronic device 100 through reverse motion, thereby implementing image stabilization. The gyroscope sensor 180B may also be used in navigation and a motion sensing game scene.

The barometric pressure sensor 180C is configured to measure an air pressure. In some embodiments, the electronic device 100 calculates an altitude by using a barometric pressure value measured by the barometric pressure sensor 180C, to assist in positioning and navigation.

The magnetic sensor 180D may include a Hall sensor. The electronic device 100 may detect an opening state or a closing state of a flip leather case by using the magnetic sensor 180D. In some embodiments, when the electronic device 100 is a clamshell phone, the electronic device 100 may detect opening and closing of a flip cover according to the magnetic sensor 180D. Further, features such as automatic unlocking of the flip cover are set based on the detected opening and closing states of the leather case or opening and closing states of the flip cover.

The acceleration sensor 180E may detect an acceleration value of the electronic device 100 in all directions (generally three axes). When the electronic device 100 is stationary, a magnitude and a direction of gravity may be measured. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance by infrared light or laser. In some embodiments, in a shooting scenario, the electronic device 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light through the light-emitting diode. The electronic device 100 uses the photodiode to detect reflected infrared light from a nearby object. When sufficient reflected light is detected, it may be determined that an object exists near the electronic device 100. When insufficient reflected light is detected, the electronic device 100 may determine that no object exists near the electronic device 100. The electronic device 100 may detect, by using the optical proximity sensor 180G, that a user holds the electronic device 100 close to an ear for a call, so as to implement automatic screen-off to save power. The optical proximity sensor 180G may be further configured to automatically unlock and lock the screen in a leather case mode and a pocket mode.

The ambient light sensor 180L is configured to sense ambient light brightness. The electronic device 100 may adaptively adjust brightness of the display 194 based on the perceived ambient light brightness. The ambient light sensor 180L may be further configured to automatically adjust white balance during photographing. The ambient light sensor 180L may also cooperate with the optical proximity sensor 180G to detect whether the electronic device 100 is in a pocket, to prevent an accidental touch.

The fingerprint sensor 180H is configured to collect a fingerprint. The electronic device 100 may use collected fingerprint features to perform unlocking by using the fingerprint, access an application lock, perform photographing by using the fingerprint, answer a call by using the fingerprint, and the like.

The temperature sensor 180J is configured to detect a temperature. In some embodiments, the electronic device 100 executes a temperature processing policy by using a temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is lower than another threshold, the electronic device 100 heats the battery 142, to prevent the electronic device 100 from being abnormally powered off due to the low temperature. In some other embodiments, when the temperature is lower than still another threshold, the electronic device 100 boosts an output voltage of the battery 142 to prevent an abnormal shutdown caused by the low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100, and is located at a position different from that of the display 194.

The key 190 includes a power button, a volume button, and the like. The key 190 may be a mechanical key or may be a touch key. The electronic device 100 may receive a key input, and generate a key signal input related to a user setting and function control of the electronic device 100.

The motor 191 may generate a vibration prompt. The motor 191 may be used for an incoming call vibration alert or a touch vibration feedback. For example, touch operations performed on different applications (for example, photographing and audio playing) may correspond to different vibration feedback effects. For touch operations performed in different regions of the display 194, the motor 191 may also correspond to different vibration feedback effects. Different application scenarios (for example, a time reminder, information receiving, an alarm clock, and a game) may further correspond to different vibration feedback effects. Touch vibration feedback effect may be further customized.

The indicator 192 may be an indicator light that may be configured to indicate a charging state and a power change, or may further be configured to a synthesis request, a missed call, a notification, and the like.

The SIM card interface 195 is used for connecting a SIM card. The SIM card may be inserted into the SIM card interface 195 or removed from the SIM card interface 195 to implement contact with and separation from the electronic device 100. The electronic device 100 may support 1 or N SIM card interfaces, N being a positive integer greater than 1. The SIM card interface 195 can support a nano SIM card, a micro SIM card, a SIM card, and the like. A plurality of cards may be inserted into the same SIM card interface 195 together. The plurality of cards may be of a same type or may be of different types. The SIM card interface 195 may further be compatible with different types of SIM cards. The SIM card interface 195 is also compatible with an external memory card. The electronic device 100 interacts with a network by using a SIM card, to implement functions such as a call and data communication.

In this embodiment of this application, the electronic device 100 may perform the method for processing a CPU frequency provided in embodiments of this application by using the processor 110.

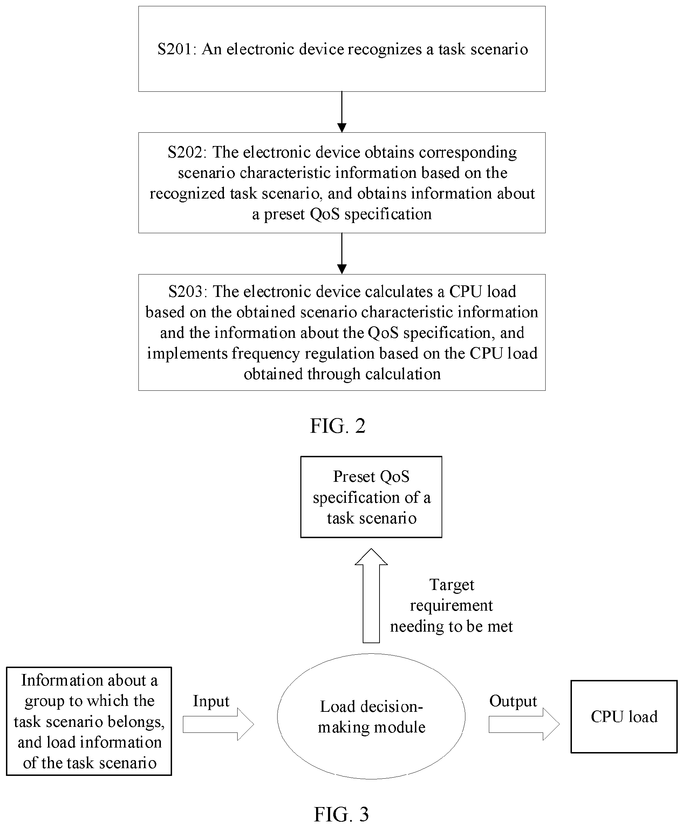

The following describes the method for processing a CPU frequency provided in embodiments of this application as an example. For example, refer to FIG. 2. The method for processing a CPU frequency provided in embodiments of this application includes but is not limited to the following steps.

S201: An electronic device recognizes a task scenario.

For example, the electronic device may be any electronic device described above. In a specific implementation, the task scenario may include a cold startup, a hot startup, sliding, tapping, screen rotation, answering of a call, answering of a voice call, answering of a video call, navigation, shooting, video recording, video playback, audio playback, downloading, installation in the background, garbage collection, file transfer, and the like. The task scenarios such as downloading, installation in the background, garbage collection, and file transfer are task scenarios that are not recognizable to or not obviously recognized by a user. It may be understood that the task scenarios of the electronic device are merely examples and do not constitute a limitation on embodiments of this application. In a specific implementation, there may be more other task scenarios, and details are not described herein.

For example, the task scenarios may run in the foreground or may run in the background. The task scenarios may be further switched between running in the foreground and running in the background.

In specific realization, the electronic device may recognize a specific type of a running task scenario by collecting information about an input (input) event and/or information related to four components.

For example, the input event may include an input event for starting any of the task scenarios. For example, video playback is used as an example. The input event may be an input event of tapping a video playback control.

For example, the four components include an activity (activity) component, a service (service) component, a broadcast receiver (broadcast receiver) component, and a content provider (content provider) component. The activity component is a window (or a user interface) used to express functions in an application, and a program flow runs in the activity component. The service component is used to complete a user-specified operation in the background, but is not used to provide a presentation of a user interface. The broadcast receiver component is a communication mechanism for transferring information between programs, and is used to receive or send a notification. The content provider component prepares a content window for all applications, and keeps databases and files.

Based on the description above, the electronic device can recognize the type of the corresponding task scenario by collecting the corresponding information about the input event and the information related to the four components. For example, video playback is still used as an example. The electronic device collects the input event of tapping the video playback control, learns, based on the activity component, that a video is played on the user interface, learns, based on the service component, that a video playback service is being provided, learns, based on the broadcast receiver component, that video data is being transmitted, learns, based on the content provider component, that a video file is being stored, and learns other related information. Therefore, the electronic device can determine that a current task scenario is a video playback scenario. Optionally, the electronic device may determine a specific task type based on any one or more of the information about the input event, information related to the activity component, information related to the service component, information related to the broadcast receiver component, and information related to the content provider component. A specific implementation is set based on an actual requirement. This is not limited in embodiments of this application. For determining of a type of another task scenario, refer to this description herein. Details are not described herein again.

In a possible implementation, if a plurality of task scenarios are running in the electronic device, the electronic device may recognize the plurality of task scenarios separately. For example, if the electronic device is playing a video in a user interface, and is running a download task in the background, the electronic device may separately recognize the video playback task scenario and the background download task scenario by collecting information about an input event and/or information related to the four components.

S202: The electronic device obtains corresponding scenario characteristic information based on the recognized task scenario, and obtains information about a preset quality of service (QoS) specification.

In a specific implementation, after recognizing a running task scenario, the electronic device may collect scenario characteristic information corresponding to the task scenario. For example, the scenario characteristic information may include information about a group to which the task scenario belongs, and load information of the task scenario.

For example, the group to which the task scenario belongs may include a top application (top-app) group, a foreground (foreground) group, a background (background) group, and a system background (system-background) group. The system-background group may also be referred to as a root (root) group. The top-app group has the highest priority for completion, then the foreground group, and then the background group and the system-background group. The background group and the system-background group have the same priority. However, the system-background group can usually access more cores. In addition, a task included in the top-app group and a task included in the foreground group both run in the foreground. The task included in the top-app group is mainly a task capable of implementing human-machine interaction (for example, including video playback, sliding, tapping, and screen rotation), while the task included in the foreground group is mainly an information notification task or a reminder task (for example, including a weather notification, a time notification, or a message notification bar). Therefore, the priority of the top-app group is higher than the priority of the foreground group.

It may be understood that the groups herein are only examples and do not constitute a limitation on embodiments of this application. In a specific implementation, grouping may also be performed in another manner, where a quantity of groups is not limited. For ease of description, an example in which the group to which the task scenario belongs includes the four groups is subsequently used for description.

For example, in a specific implementation, each task scenario belongs to a definite group at a time. It may be understood that, in a possible implementation, if switching between running in the foreground and running in the background may be implemented in the task scenario, the task scenario does not always belong to a same group. For example, when the task scenario runs in the foreground, the group to which the task scenario belongs is the top-app group or the foreground group. When the task scenario runs in the background, the group to which the task scenario belongs is the background group.

For example, information about the group to which the task scenario belongs may be grouped and managed (including switching of the group to which the task scenario belongs) via an application management system (application management system, AMS). Specifically, the task may be grouped and managed via an oomAdjuster process in the AMS. Therefore, the electronic device can obtain, via the AMS, the information about the group to which the specific task scenario belongs. For example, each task scenario has a corresponding identifier. In the AMS, an identifier of a task scenario is associated with a group to which the task scenario belongs. Therefore, after recognizing the running task scenario, the electronic device can find, in the AMS based on the identifier of the task scenario, the information about the group to which the task scenario belongs.

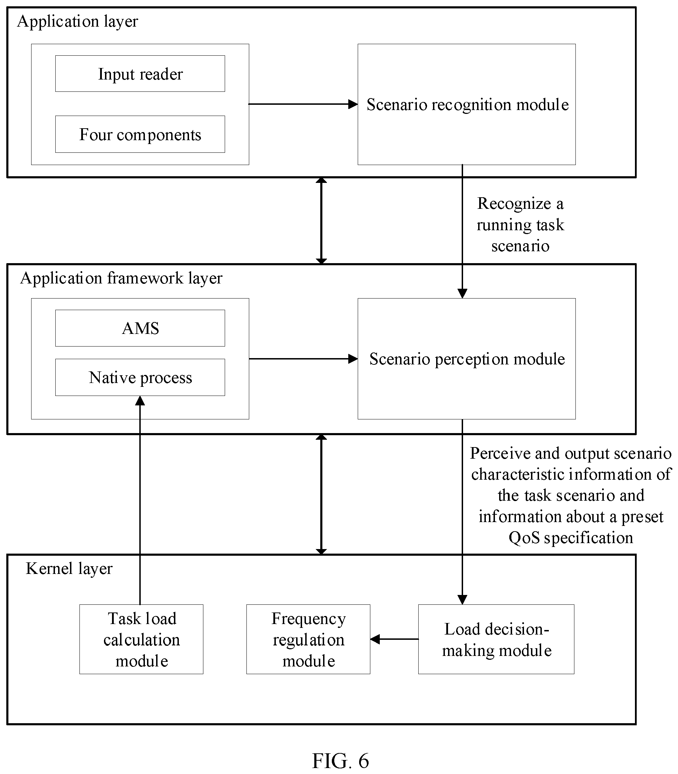

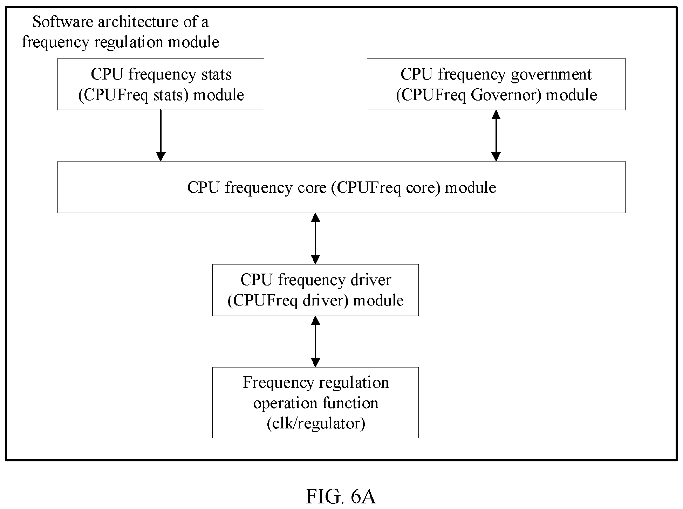

For example, based on the introduction of the foregoing terms, it can be learned that the task is executed by a thread. Therefore, a load of the task scenario is a load of the thread. The load of the thread is obtained through calculation based on a running time of the thread and a corresponding clock cycle (cycle). The load of the thread determines a size of the task. The size of the task represents occupancy of computing power on a corresponding central processing unit (central processing unit, CPU), and represents load pressure on the CPU. For example, in a specific implementation, the electronic device may obtain the load information of the task scenario from a task load calculation module at a kernel layer. For details, refer to description in FIG. 6.

For example, the electronic device may further obtain the information of the preset QoS specification. The information of the preset QoS specification may include information of specifications, for example, a frame rate, a response delay, and power consumption. For example, the QoS specification is defined based on a human factors index. A specification of the frame rate may include, for example, a requirement for a frame rate during sliding in the user interface. The frame rate is strongly bound to a refresh rate. A specification of the response delay may include, for example, a requirement for a response delay for tapping by a user. The power consumption includes, for example, a requirement for power consumption of a system on chip (system on Chip, SoC). It may be understood that, this is merely an example and does not constitute a limitation on embodiments of this application.

Because the information of the QoS specification may be preset, the electronic device may obtain the information of the QoS specification in preset storage space. A specific value of the preset QoS specification and a storage location are not limited in this embodiment of this application. For example, the QoS specification shows the performance of the electronic device. Regardless of the task scenario running in the electronic device, it is required to satisfy the preset QoS specification. For example, the preset QoS specification may be adjusted based on an actual application requirement, which is not limited in this embodiment of this application.

S203: The electronic device calculates the CPU load based on the obtained scenario characteristic information and the information of the QoS specification, and implements frequency regulation based on the CPU load obtained through calculation.

In a specific implementation, there is a correspondence between the CPU load and the CPU running frequency. When the CPU load is larger, the CPU running frequency is larger. Conversely, when the CPU load is smaller, the CPU running frequency is lower. For example, the correspondence between the CPU load and the CPU running frequency may be represented by a mapping table, and a specific correspondence may be set based on an actual application. This is not limited in this embodiment of this application. The electronic device periodically calculates the CPU load, and implements CPU frequency regulation based on the correspondence between the CPU load and the CPU running frequency.

For example, the electronic device may adopt a task load counted in a frequency regulation window corresponding to the CPU as the CPU load, and then may perform frequency regulation based on the CPU load. For example, the frequency regulation window may be, for example, a time period of a preset duration. The preset duration may be set based on the actual application, which is not limited in this embodiment of this application.

In this embodiment of this application, in order to more reasonably optimize the system performance and reduce power consumption, the CPU load may be calculated based on the group to which the task scenario belongs and the preset QoS specification. For ease of understanding, refer to FIG. 3 for an example. In FIG. 3, it is assumed that the electronic device calculates the CPU load based on the obtained scenario characteristic information and the information of the QoS specification via a load decision-making module shown in the figure. An input of the load decision-making module is the obtained information of the group to which the task scenario belongs and the load information of the task scenario, and the CPU load is calculated and output for satisfying the collected preset QoS specification.

For example, in a specific implementation, a corresponding impact factor may be preset first for different groups. For tasks in different groups, corresponding loads may be adjusted based on the impact factors, to implement subsequent frequency regulation. For ease of understanding, refer to Table 1 for an example.

Table 1

| Group | Impact factor |
|---|---|
| Top-app group | a |
| Foreground group | b |
| Background group | c |
| Root group | d |

As shown in Table 1, a preset impact factor corresponding to the top-app group is a, a preset impact factor corresponding to the foreground group is b, a preset impact factor corresponding to the background group is c, and a preset impact factor corresponding to the root group is d. Values of the a, b, c, and d are all greater than 0 and less than or equal to 1. For example, an impact factor corresponding to a group to which a task running in the background belongs is less than an impact factor corresponding to a group to which a task running in the foreground belongs. For example, an impact factor c corresponding to the background group is less than an impact factor a corresponding to the top-app group, and less than an impact factor b corresponding to the foreground group. For another example, an impact factor d corresponding to the root grouping is less than the impact factor a corresponding to the top-app group, and less than the impact factor b corresponding to the foreground group.

After receiving the information about the group to which the input task scenario belongs and the load information of the task scenario, the load decision-making module obtains a corresponding preset impact factor based on the group to which the task scenario belongs, and multiplies the impact factor with a load of the input task scenario, to obtain a new load of the task scenario. The new load is used to perform subsequent frequency regulation, and is therefore referred to as a frequency regulation load. If scenario characteristic information of the plurality of task scenarios is collected in one frequency regulation window, one or more frequency regulation loads may be obtained through calculation for each task scenario. A CPU load output may be obtained by adding the frequency regulation loads of the plurality of task scenarios.

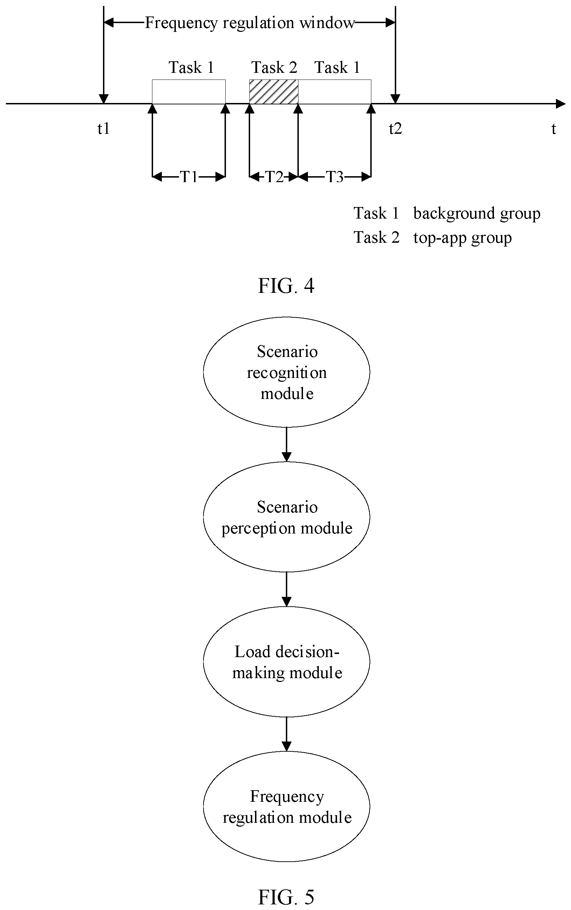

If a plurality of frequency regulation loads may be obtained through calculation for one task scenario, for example, if the one task scenario is paused (that is, exits from the running of the task) after running for a specific period of time in the frequency regulation window, and then continues to run for a specific period of time after being paused for a specific period of time. Then, one frequency regulation load for the task scenario may be obtained through calculation in a running time period before the pause. The one frequency regulation load for the task scenario may further be obtained through calculation in the time period at which the one task scenario is paused and then continues to run. For ease of understanding, an example is used below for description with reference to FIG. 4.

In FIG. 4, it is assumed that there are two tasks running in the one frequency regulation window, namely, a task 1 and a task 2. The task 1 belongs to the background group, and the task 2 belongs to the top-app group. In this case, the collected scenario characteristic information includes scenario characteristic information of the task 1 and scenario characteristic information of the task 2. Specifically, in the frequency regulation window, the task 1 runs in a time period T1 and a time period T3 separately, and the task 1 is paused between the time period T1 and the time period T3. The task 2 runs in a time period T2. It may be learned from the above description that the task load is obtained through calculation based on a running time of the task and corresponding cycle information. Therefore, a load of the task 1 that is collected in the time period T1 is a load 1, a load of the task 2 that is collected in the time period T2 is a load 2, and a load of the task 3 that is collected in the time period T3 is a load 3. In addition, information of a background group to which the task 1 belongs may further be collected, and information of a top-app group to which the task 2 belongs may further be collected. It may be learned from Table 1 that the impact factor corresponding to the background group is c and the impact factor corresponding to the top-app group is a. Therefore, a formula for calculating a CPU load in the frequency regulation window is as follows:

$$\text{CPU load} = c * \text{Load } 1 + a * \text{Load } 2 + c * \text{Load } 3.$$

After the CPU load is obtained through calculation, the CPU load obtained through calculation may be input to a CPU frequency governor (frequency governor) for frequency regulation, to obtain an adjusted CPU running frequency. Then, the task in the electronic device runs based on the adjusted CPU running frequency.

It may be understood that two groups, namely, the background group and the top-app group in FIG. 4 are merely used as examples. In a specific implementation, there may be other groups. In addition to two groups, more groups such as three or four groups of tasks may run in a mixed manner. This is not limited in this embodiment of this application.

Furthermore, it may be learned from FIG. 3 that the CPU load output by the load decision-making module needs to satisfy the collected preset QoS specification. In a process in which the task in the electronic device runs based on the adjusted CPU running frequency, the electronic device may detect in real time whether the preset QoS specification is satisfied. For example, the electronic device detects whether a response delay in a task running process satisfies a response delay required by the preset QoS specification, and detects whether power consumption in the task running process satisfies power consumption required by the preset QoS specification. In the process in which the task in the electronic device runs based on the adjusted CPU running frequency, if the preset QoS specification is satisfied, it indicates that the CPU load output by the load decision-making module satisfies the preset QoS specification.

In the process in which the task in the electronic device runs based on the adjusted CPU running frequency, if the preset QoS specification is not satisfied, it is necessary to further adjust the preset impact factor, and recalculate the CPU load until the preset QoS specification is satisfied. For example, that the preset QoS specification is not satisfied includes that one or more requirements for the preset QoS specification, such as a frame rate, a response delay, and power consumption are not satisfied. For ease of understanding, an example is used below for description.

For example, in the process in which the task in the electronic device runs based on the adjusted CPU running frequency, if the response delay required by the preset QoS specification is satisfied but actual power consumption exceeds the power consumption required by the preset QoS specification, it indicates that the CPU running frequency is excessively high, resulting in a waste of power consumption. In this case, the electronic device may feed back this detection result to the load decision-making module. After the load decision-making module learns that the CPU running frequency is excessively high, an impact factor corresponding to the group to which the current running task belongs may be adaptively reduced. Then, the CPU load output is recalculated based on the reduced impact factor. For example, scenario characteristic information that corresponds to the task scenario and is used to recalculate the CPU load may be the information obtained in step S202; or may be, for example, scenario characteristic information that corresponds to the task scenario and is re-obtained by the electronic device based on the implementation process in step S202. In a specific implementation, a choice may be made based on an actual need, which is not limited in this embodiment of this application.

After the CPU load output is recalculated based on the reduced impact factor, the CPU load obtained through recalculation may be input to the CPU frequency governor for performing frequency regulation, to obtain the adjusted CPU running frequency. Because the impact factor is reduced, the CPU load obtained through calculation is reduced, resulting in reduction of the CPU running frequency obtained by performing frequency regulation again. Then, a task in the electronic device runs at the reduced CPU running frequency. Because the CPU running frequency is reduced, power consumption is reduced, and a waste of power consumption is reduced.

Alternatively, for example, in the process in which the task in the electronic device runs based on the adjusted CPU running frequency, if the requirements for power consumption required by the preset QoS specification are met but the actual response delay exceeds the response delay required by the preset QoS specification, it indicates that the CPU running frequency is low. As a result, the performance requirements for the service are not met. In this case, the electronic device may feed back this detection result to the load decision-making module. After the load decision-making module learns that the CPU running frequency is low, the impact factor corresponding to the group to which the current running task belongs may adaptively increase. Then, the CPU load output is recalculated based on the increased impact factor. For example, the scenario characteristic information that corresponds to the task scenario and is used to recalculate the CPU load may be the information obtained in step S202; or may be, for example, the scenario characteristic information that corresponds to the task scenario and is re-obtained by the electronic device based on the implementation process in step S202. In a specific implementation, a choice may be made based on an actual need, which is not limited in this embodiment of this application.

After the CPU load output is recalculated based on the increased impact factor, the CPU load obtained through recalculation is input to the CPU frequency governor for performing frequency regulation, to obtain the adjusted CPU running frequency. Because the impact factor increases, the CPU load obtained through calculation increases, resulting in the increase of the CPU running frequency obtained by performing frequency regulation again. Then, the task in the electronic device runs at the increased CPU running frequency. Due to the increase of the CPU running frequency, the response delay of the service may increase, to meet the performance requirements for the service.

For example, the impact factor may be adjusted in a stepwise manner, adjusted by randomly generating an adjustment amount, or adjusted in other preset manners, which is not limited in this embodiment of this application.

For example, in the process in which the task in the electronic device runs based on the readjusted CPU running frequency, the electronic device may still detect in real time whether the preset QoS specification is satisfied. If the preset QoS specification is not satisfied, the impact factor is continuously adjusted through the above method, and a new CPU running frequency is obtained through recalculation, until the preset QoS specification is satisfied. If the preset QoS specification is satisfied, the electronic device continuously runs at a current CPU running frequency until a frequency regulation result of a next frequency regulation window is output.

It can be learned from the above description that, in this embodiment of this application, a balance between performance and power consumption may be implemented, and a waste of power consumption may be reduced as much as possible while performance is met.

In another possible implementation, except that the impact factor is associated with the group to which the task scenario belongs, the impact factor may be associated with the task scenario. For example, refer to Table 2 for an example.

Table 2

| Task scenario<br>Group | Task scenario 1 | Task scenario 2 | Task scenario 3 | ... |
|---|---|---|---|---|
| Top-app group | a | b | c | ... |
| Foreground group | d | e | f | ... |
| Background group | g | h | k | ... |
| Root group | z | m | n | |

Table 2 shows, for example, a correspondence between a group to which the task scenario belongs and the impact factor corresponding to the task scenario. A value of the impact factor is greater than 0 and less than 1. Values of the impact factors in Table 2 are not related to that in Table 1. The task scenario 1 is used as an example. If a group to which the task scenario 1 belongs is the top-app group, an impact factor of the task scenario 1 is a. If the group to which the task scenario 1 belongs is the foreground group, the impact factor of the task scenario 1 is d. If the group to which the task scenario 1 belongs is the background group, the impact factor of the task scenario 1 is g. If the group to which the task scenario 1 belongs is the root group, the impact factor of the task scenario 1 is z. The same applies to other task scenarios, and details are not described herein.

It can be learned from Table 1 that, for a same task scenario, if the group to which the task scenario belongs is different, the impact factor corresponding to the task scenario is different. In addition, for a same group, if the task scenario is different, the corresponding impact factor may not be different. It may be understood that, in the same group, some of the impact factors corresponding to the different task scenarios may be the same or may not be the same. This is not limited in this embodiment of this application.

For example, in a specific implementation, after receiving the information about the group to which the input task scenario belongs and the load information of the task scenario, the load decision-making module obtains a corresponding preset impact factor based on the task scenario and the group to which the task scenario belongs, and multiplies the impact factor with a load of the input task scenario, to obtain a new load of the task scenario. Similarly, the new load is used to perform subsequent frequency regulation, and is therefore referred to as a frequency regulation load. If scenario characteristic information of the plurality of task scenarios is collected in one frequency regulation window, one or more frequency regulation loads may be obtained through calculation for each task scenario. A CPU load output may be obtained by adding the frequency regulation loads of the plurality of task scenarios. For ease of understanding, an example is still used below for description with reference to FIG. 4.

In FIG. 4, it may be learned from the above description that, a load of the task 1 that is collected in the time period T1 is the load 1, a load of the task 2 that is collected in the time period T2 is the load 2, and a load of the task 3 that is collected in the time period T3 is the load 3. In addition, the information of the background group to which the task 1 belongs may further be collected, and the information of the top-app group to which the task 2 belongs may further be collected. If the task 1 is the task scenario 1 in Table 2, the task 2 is the task scenario 2 in Table 2. It may be learned from Table 2 that the impact factor corresponding to the task 1 is g, and the impact factor corresponding to the task 2 is b. Therefore, a formula for calculating a CPU load in the frequency regulation window is as follows:

$$CPU\ load = g * Load\ 1 + b * Load\ 2 + g * Load\ 3.$$

After the CPU load is obtained through calculation, frequency regulation may be performed based on the CPU load. Optionally, it may detect whether the running after frequency regulation satisfies the preset QoS specification. For details, refer to the above description. Details are not described herein again. In this implementation, because different task scenarios in different groups correspond to respective impact factors, the load may be adjusted based on finer granularity, thereby adjusting the CPU running frequency based on the finer granularity, and better optimizing the performance and power consumption of the electronic device.

In another possible implementation, the impact factor may not be associated with the group to which the task scenario belongs, and each task scenario corresponds to an impact factor alone. When the CPU load is calculated, the task load is multiplied by the corresponding impact factor. It may be understood that, this is merely an example and does not constitute a limitation on embodiments of this application.

For ease of understanding, the following describes, with reference to FIG. 5 and FIG. 6, the method for processing a CPU frequency provided in this embodiment of this application.

As shown in FIG. 5, the electronic device may include a scenario recognition module, a scenario perception module, a load decision-making module, and a frequency regulation module.

The scenario recognition module is configured to recognize the task scenario, that is, configured to determine a specific type of a running task scenario. For example, the scenario recognition module may be integrated into an apk of a system, and recognize the specific type of the running task scenario by collecting the information of the input event and/or the information related to the four components. The scenario recognition module may be, for example, configured to perform the operations described in step S201 of the method for processing a CPU frequency shown in FIG. 3.

The scenario perception module is configured to obtain the scenario characteristic information of the task scenario and the information of the preset QoS specification. That is, the scenario perception module may be configured to determine the group of the task. The scenario perception module may be, for example, configured to perform the operations described in step S202 of the method for processing a CPU frequency shown in FIG. 3.

The load decision-making module is configured to calculate the CPU load. An input of the load decision-making module is the obtained information about the group to which the task scenario belongs and the load information of the task scenario, and the CPU load is calculated and output for satisfying the collected preset QoS specification. The load decision-making module may be, for example, the load decision-making module in step S203 of the method for processing a CPU frequency shown in FIG. 3.

The frequency regulation module is configured to perform frequency regulation based on the CPU load output by the load decision-making module, to obtain a latest CPU running frequency. For example, the frequency regulation module may be, for example, the CPU frequency governor. A specific frequency regulation method is not limited in this embodiment of this application.

It may be understood that the division of the modules shown in FIG. 5 are merely examples. In a specific implementation, the modules may be divided into other software and/or hardware modules with different granularity, which is not limited in this embodiment of this application.

For example, the modules shown in FIG. 5 may be implemented in combination with a software system of the electronic device. The software system of the electronic device may use a layered architecture, an event-driven architecture, a microkernel architecture, a microservice architecture, or a cloud architecture. In this embodiment of this application, an Android system with the layered architecture is used as an example to describe a software structure of the electronic device.

In the layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. In this embodiment of this application, layers mainly involved include an application layer, an application framework layer, and a kernel layer. Therefore, the following describes interaction between the three layers as an example. Refer to FIG. 6 for an example.

It may be learned from FIG. 6 that, the application layer may include the scenario recognition module, an input reader (input reader), and the four components. The input reader is configured to collect the input event. In a specific implementation, the scenario recognition module may obtain the input event from the input reader, may further obtain information related to the four components from the four components, and may recognize the specific type of the running task scenario. For a specific implementation process, refer to the corresponding description in step S201. Details are not described herein again.

It may be further learned from FIG. 6 that the application framework layer may include the scenario perception module, the AMS, and a native (native) process. After recognizing the running task scenario, the scenario recognition module in the application layer may notify the scenario perception module of obtaining perceived scenario characteristic information corresponding to the task scene and obtaining the information of the preset QoS specification. Specifically, the scenario perception module may obtain, from the AMS, information of a group to which the specific task scenario belongs, and obtain load information of the specific task scenario from the task load calculation module of the kernel layer via the native process. For example, information of the task load in the task load calculation module at the kernel layer may be obtained via a native daemon (daemon) process in a socket (socket) communication manner. For a specific implementation, refer to the corresponding description in step S202. Details are not described herein again.

It may further be learned from FIG. 6 that the kernel layer may include the task load calculation module, the frequency regulation module, and the load decision-making module. The scenario perception module in the application framework layer obtains the scenario characteristic information corresponding to the task scenario and the information of the preset QoS specification, and outputs the scenario characteristic information corresponding to the task scenario and the information of the preset QoS specification to the load decision-making module. The load decision-making module calculates the CPU load based on the scenario characteristic information corresponding to the task scenario and the information of the preset QoS specification. Then, the load decision-making module outputs the CPU load obtained through calculation to the frequency regulation module. The frequency regulation module performs frequency regulation based on the CPU load. For a specific implementation, refer to the corresponding description in step S203. Details are not described herein again.

For example, FIG. 6A is a schematic diagram of a software architecture of the frequency regulation module. It may be learned that the frequency regulation module may include a CPU frequency core (CPUFreq core) module, a CPU frequency stats (CPUFreq stats) module, a CPU frequency governor (CPUFreq Governor) module, a CPU frequency driver (CPUFreq driver) module, and a frequency regulation (clk/regulator) operation function. CPU frequency regulation is implemented via cooperation of the modules and functions. The specific frequency regulation process is not limited in this embodiment of this application. It may be understood that the software architecture of the frequency regulation module shown in FIG. 6A is merely an example, and does not constitute a limitation on this embodiment of this application.

In another possible implementation, in a process in which the task in the electronic device runs based on the adjusted CPU running frequency, the scenario perception module in the application framework layer may further detect in real time whether the preset QoS specification is satisfied. If the preset QoS specification is not satisfied, the load decision-making module is notified, and is indicated to recalculate the CPU load. For a specific implementation, refer to the corresponding description in step S203. Details are not described herein again.

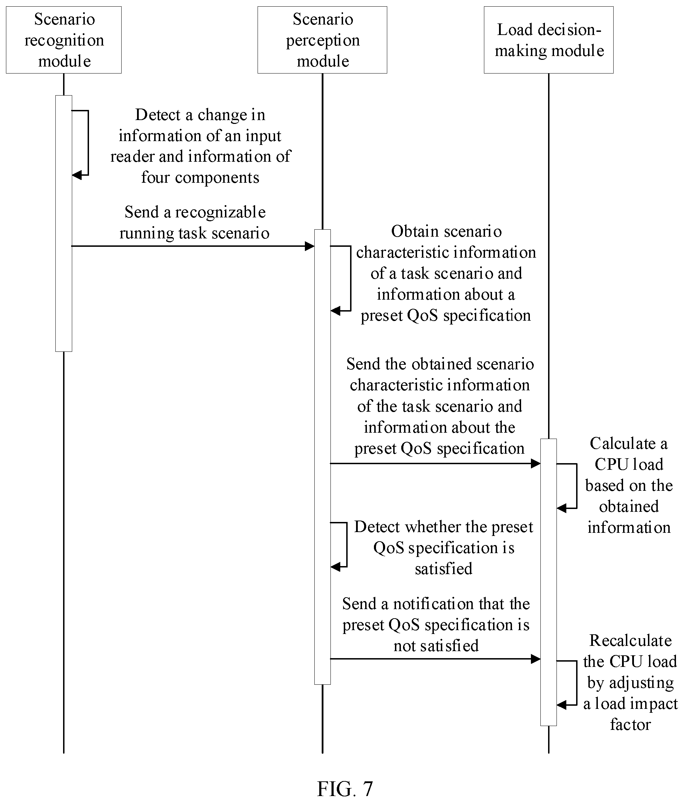

For ease of understanding of an interaction process between the scenario recognition module, the scenario perception module, and the load decision-making module, refer to FIG. 7 for an example. For a specific implementation of steps shown in FIG. 7, refer to the above description. Details are not described herein again.

It may be understood that, FIG. 6 and FIG. 7 are merely examples and do not constitute a limitation on this embodiment of this application.

Based on the foregoing description, compared to an existing method for calculating the CPU load, the calculation method in this embodiment of this application considers the impact on the CPU load from the group to which the task scenario belongs, and further considers the impact of the CPU load on the QoS specification. During calculation of the CPU load, the group to which the task scenario belongs and the collected load of the task scenario are used as inputs, and the CPU load is comprehensively calculated to satisfy the requirement for the preset QoS specification. Therefore, the CPU running frequency obtained by performing frequency regulation based on the CPU load obtained through calculation, with performance requirements for tasks satisfied and power consumption and a waste of power consumption reduced as much as possible. For ease of understanding, the following further describes with reference to examples.

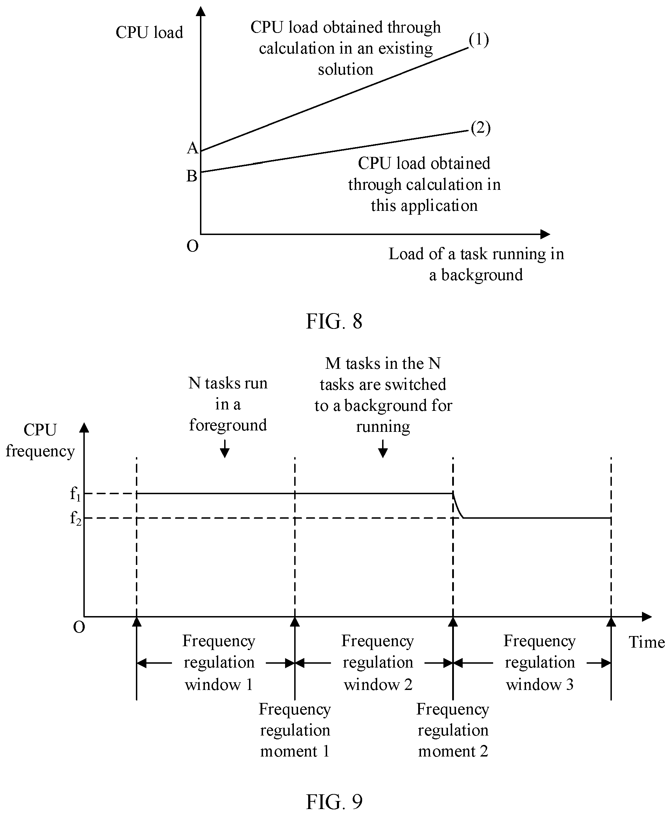

The existing method for calculating the CPU load is to add task loads of the electronic device running in one frequency regulation window. That is, the sum of the task loads running in the frequency regulation window is the CPU load. In this embodiment of this application, the CPU load is calculated based on the impact factor corresponding to the group to which the task belongs. For example, refer to the above calculation process of the CPU load in FIG. 4. In this embodiment of this application, because the requirement for performance such as the response delay of the task running in the background is lower than that of the task running in the foreground, an impact factor corresponding to the group to which the task running in the background belongs is less than an impact factor corresponding to the group to which the task running in the foreground belongs In this way, the CPU load obtained through calculation is reduced in the mixed task scenario in which the task running in the foreground and the task running in the background are included, so that a regulated frequency obtained based on the CPU load is reduced, thereby further reducing running power consumption. For example, it may be intuitively learned from FIG. 8 that an existing calculation result of the CPU load is different from a calculation result of the CPU load in this embodiment of this application.

In FIG. 8, tasks running in one frequency regulation window are classified into two types, namely, the task running in the foreground and the task running in the background. It is assumed that the task running in the foreground belongs to a same group, for example, belongs to the top-app group or the foreground group, with the top-app group as an example. It is assumed that the task running in the background belongs to a same group, for example, belongs to the background group or the root group, with the background group as an example. In this case, the existing calculation method for the CPU load is as follows:

$$CPU\ load\_1 = Load\ of\ task\ running\ in\ foreground + Load\ of\ task\ running\ in\ background, \qquad (1).$$

It may be understood that the load of the task running in the foreground and the load of the task running in the background may be, for example, the load of the task scenario obtained based on the method in S202.

The calculation method for the CPU load in this embodiment of this application is as follows:

$$CPU\ load\_1 = a * Load\ of\ task\ running\ in\ foreground + c * Load\ of\ task\ running\ in\ background, \qquad (2),$$

where a is the impact factor corresponding to the top-app group shown in Table 1, and c is the impact factor corresponding to the background group shown in Table 1.

Based on the formula (1) and the formula (2), assuming that the load of the task running in the foreground is fixed, the load of the task running in the background is a variable (represented by a horizontal axis), and the CPU load obtained through calculation is a dependent variable (represented by a vertical axis), a variation relationship lines of the two CPU loads shown in FIG. 8 may be obtained. In FIG. 8, a line (1) is a relationship line drawn based on the formula (1), representing a change in the existing CPU load. A point A represents a fixed load of the task running in the foreground, or a CPU load obtained through calculation when there is no load of the task running in the background in an existing solution. A line (2) is a relationship line drawn based on the formula (2), representing a change in the CPU load in this embodiment of this application. A point B represents a load obtained by multiplying the fixed load of the task running in the foreground by the impact factor a, and also represents the CPU load obtained through calculation when there is no load of the task running in the background in this embodiment of this application. If a = 1, the point A is overlapped with the point B. It may be learned from FIG. 8 that, as the load of the task running in the background increases, the CPU loads obtained through the two calculation methods increase. However, in this embodiment of this application, considering the grouping of the task, due to the presence of the impact factor c corresponding to the background group, the CPU load obtained through calculation is smaller than the CPU load obtained through calculation in the existing solution. This enables the regulated frequency obtained based on the smaller CPU load to be reduced, thereby reducing running power consumption.

It may be understood that FIG. 8 is mainly drawn as an example of the grouping and the impact factors shown in Table 1, and in a specific implementation, a corresponding relationship line may further be drawn based on the relationships in Table 2. Details are not described herein again. In addition, a transformation relationship curve shown in FIG. 8 is merely a schematic curve, and mainly reflects the relationship between the CPU load obtained through calculation in the existing solution and the CPU load obtained through calculation in this embodiment of this application, and does not constitute a limitation on this embodiment of this application.

Based on the foregoing description, in this embodiment of this application, if the task running in the foreground of the electronic device is switched to the background for running, the CPU load obtained through calculation is reduced, thereby enabling the CPU running frequency to be reduced. For ease of understanding, refer to FIG. 9 for an example.

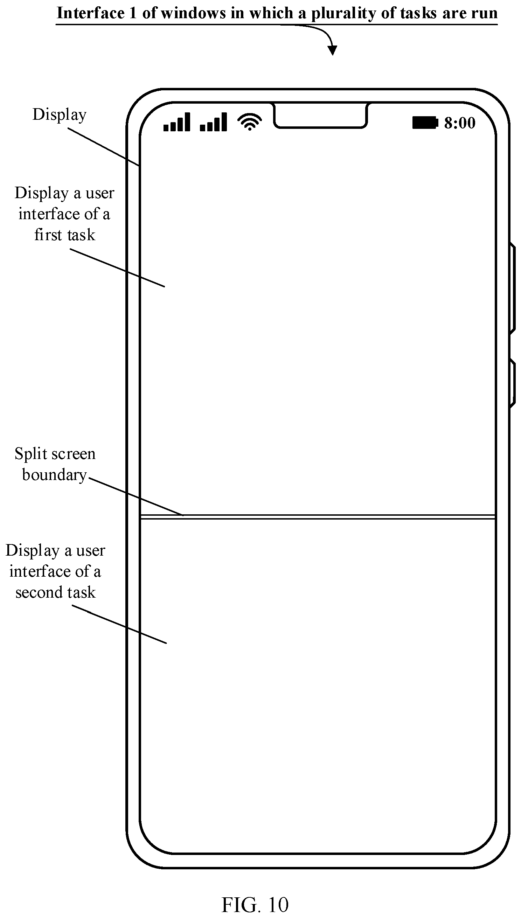

In FIG. 9, it is assumed that the electronic device runs N tasks in the foreground in a frequency regulation window 1, where N is an integer greater than 1. Based on the introduction of the foregoing terminologies, a user interface corresponding to the task running in the foreground may be viewed on a display of the electronic device. For example, the electronic device may display a user interface of the N tasks on the display in a split screen manner. Refer to FIG. 10 for an example. In FIG. 10, N = 2 is used as an example. It may be learned from FIG. 10 that, a split screen boundary divides the display into two parts. One part is used to display a user interface of a first task, and the other part is used to display a user interface of a second task.

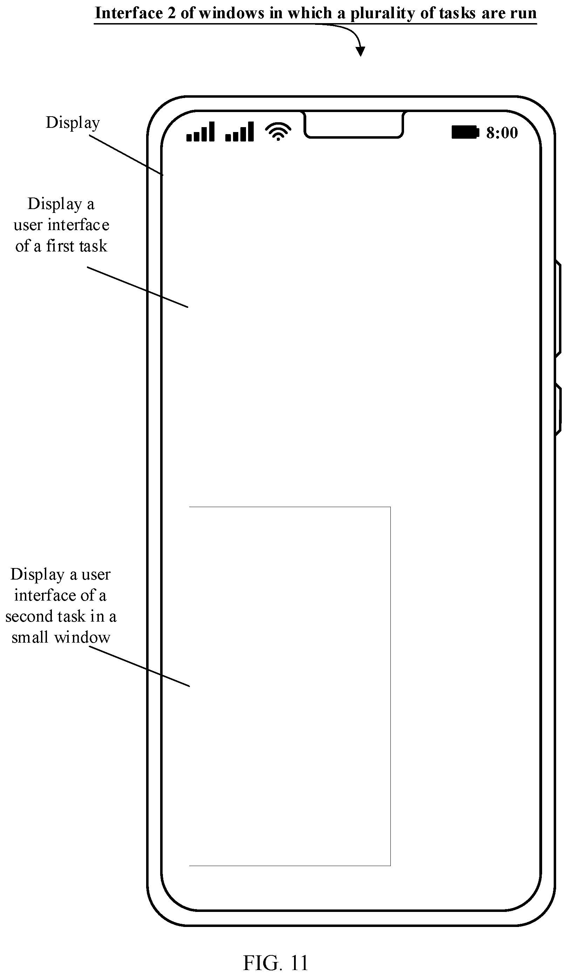

For example, in another possible implementation, the electronic device may display the user interface of the N tasks on the display in a small floating window manner. Refer to FIG. 11 for an example. In FIG. 11, N = 2 is used as an example. It may be learned from FIG. 11 that, the user interface of the first task may be displayed on the display. Then, a small floating window that may be dragged may be started. The user interface of the second task is displayed in the small window.

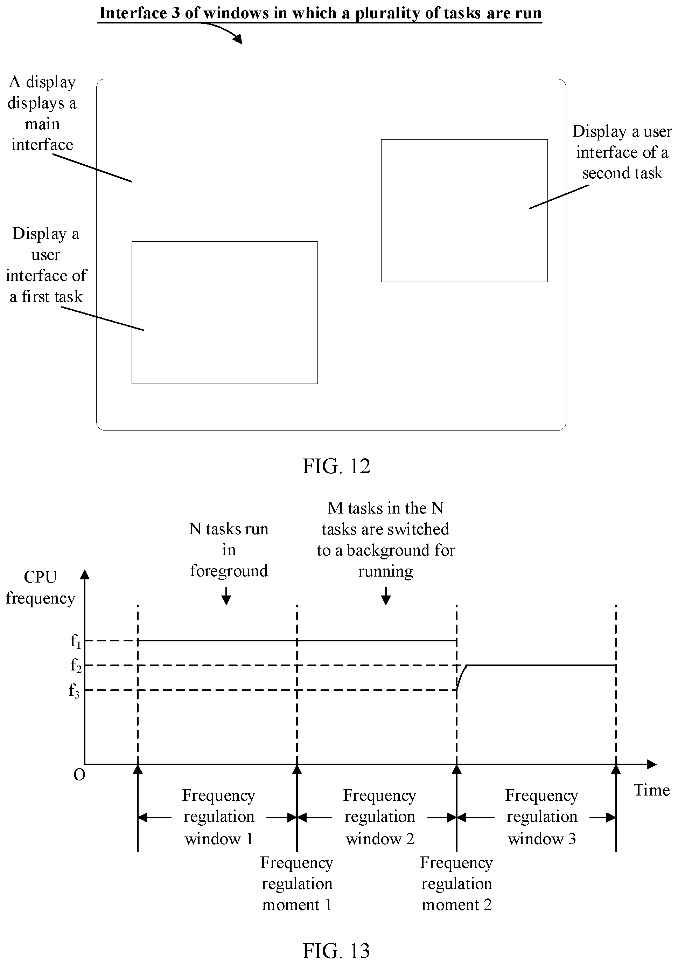

For example, in another possible implementation, refer to FIG. 12 for an example in which the user interface of N tasks is displayed by means of the small window. In FIG. 12, the display may be used to display a default main interface of a system (the main interface includes icons of various applications). One or more small floating windows may be started on the main interface, each small window may be used to display a user interface of one task. For example, in FIG. 12, two small windows may be started on the main interface, one small window is used to display the user interface of the first task, and the other small window is used to display the user interface of the second task.

For example, the user interfaces shown in FIG. 10 and FIG. 11 may be displayed in the electronic devices such as a mobile phone. The user interface shown in FIG. 12 may be displayed in large-screen electronic devices such as a tablet computer or a desktop computer. It may be understood that FIG. 10 to FIG. 12 are merely examples, and do not constitute a limitation on this embodiment of this application.

In FIG. 9, the electronic device runs the N tasks in the foreground in the frequency regulation window 1, and starts performing frequency regulation at a frequency regulation moment 1 in the frequency regulation window 1 based on the task load, the group of the task, and the preset QoS specification. For a specific implementation, refer to the above corresponding description in FIG. 2. Details are not described herein again. Assuming that the CPU frequency remains unchanged after frequency regulation, is still $f_1$, the electronic device continues to run the N tasks at the CPU frequency of $f_1$ in a frequency regulation window 2.

In the frequency regulation window 2, M tasks in the N tasks are switched to the background for running, where M is an integer greater than 0 and less than N. For example, there are various methods for switching the task to the background for running. For example, in the scenario shown in FIG. 10, the split screen boundary may be pulled down to cancel the split screen, to switch the second task to the background for running. Alternatively, the split screen boundary may be pulled up to cancel the split screen, to switch the first task to the background for running. For example, in the scenario shown in FIG. 11 or FIG. 12, the task corresponding to the user interface displayed in the small window may be switched, by tapping a minimization control (not shown in the figure) in an upper right corner of the small window, to the background for running. It may be understood that this is merely an example. The task running in the foreground may be switched, by performing other operations, to the background for running. This is not limited in this embodiment of this application.

After the M tasks in the N tasks are switched to the background for running, there are N-M tasks running in the foreground and M tasks running in the background in the electronic device. At a frequency regulation moment 2, the electronic device starts performing frequency regulation based on the task load, the group of the task, and the preset QoS specification in the frequency regulation window 2. In this frequency regulation, although the N tasks still run in the electronic device, the group of the M tasks is changed from the top-app group or the foreground group to the background group because the M tasks in the N tasks are switched to the background for running. Therefore, when a CPU load in the frequency regulation window 2 is calculated, an impact factor of the M tasks is changed. Table 1 is used as an example. The impact factor changes from a or b to c. Because c is less than a (or less than b), the CPU load obtained through calculation is reduced, and the CPU frequency obtained by means of performing frequency regulation is reduced. Therefore, as shown in FIG. 9, a CPU frequency in a frequency regulation window 3 is reduced. For example, the electronic device still runs the M tasks in the background and runs the N-M tasks in the foreground in the frequency regulation window 3. Alternatively, for example, the electronic device may run other tasks in the frequency regulation window 3. This is not limited in this embodiment of this application.

In another possible implementation, when frequency regulation starts at the frequency regulation moment 2, the preset QoS specification needs to be satisfied. Therefore, the CPU running frequency may be slowly reduced by means of performing frequency regulation several times, so that the preset QoS specification may be satisfied. That is, balance between performance and power consumption is implemented. For a specific implementation, refer to the above description. Details are not described herein again. In view of this, the CPU frequency obtained by means of performing frequency regulation at the frequency regulation moment 2 is gradually reduced until the CPU frequency tends to a stable frequency value $f_2$. In other words, when the electronic device runs at the CPU frequency of $f_2$, the preset QoS specification may be satisfied, to implement the balance between performance and power consumption.

In another possible implementation, refer to FIG. 13 for an example. For frequency regulation starting at the frequency regulation moment 2, if the obtained CPU frequency is low, for example, the obtained CPU frequency is a frequency value $f_3$ shown in FIG. 13, and the electronic device detects that the preset QoS specification is not satisfied after running the task at the frequency value $f_3$, the CPU frequency may slowly increase by means of performing frequency regulation several times, so that the preset QoS specification may be satisfied. That is, the balance between performance and power consumption is implemented. Therefore, after one or more frequency regulations are performed again, the CPU frequency obtained by means of performing frequency regulation at the frequency regulation moment 2 is gradually increased until the CPU frequency tends to a stable frequency value $f_2$. In other words, when the electronic device runs at the CPU frequency of $f_2$, the preset QoS specification may be satisfied, to implement the balance between performance and power consumption.

In another possible implementation, frequency regulation starting at the frequency regulation moment 2 is one or more frequency regulations for satisfying the preset QoS specification. This enables the CPU frequency to be changed in an oscillation manner in the process in which a finally obtained frequency tends to the stable frequency value $f_2$. For example, in FIG. 9, a process in which the CPU frequency is reduced from the frequency value $f_1$ to the frequency value $f_2$ may be an oscillatory reducing process. For another example, in FIG. 13, a process in which the CPU frequency increases from the frequency value $f_3$ to the frequency value $f_2$ may be an oscillatory increase process.

It may be understood that possible implementations in FIG. 9 and FIG. 13 are merely examples, and do not constitute a limitation on this embodiment of this application.

An embodiment of this application further provides an electronic device, where the electronic device includes one or more processors and one or more memories; and the one or more memories are coupled to the one or more processors, the one or more memories are configured to store computer program code, and the computer program code includes computer instructions, and when the one or more processors execute the computer instructions, the electronic device is enabled to perform the method in the foregoing embodiments.

An embodiment of this application further provides a chip system. The chip system is used in an electronic device, and the chip system includes one or more processors. The one or more processors are configured to invoke computer instructions to enable the electronic device to perform the method in the foregoing embodiments.

An embodiment of this application further provides a computer program product including instructions. When the computer program product is run on an electronic device, the electronic device is enabled to perform the method in the foregoing embodiments.

An embodiment of this application provides a computer-readable storage medium including instructions. When the computer instructions are run on an electronic device, the electronic device is enabled to perform the method in the foregoing embodiments.

It may be understood that implementations of this application may be randomly combined, to achieve different technical effect.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When instructions of the computer program are loaded and executed on a computer, procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, coaxial-cable, optical-fiber, or digital-subscriber-line) or wireless (for example, infrared, radio, or microwave) manner. The computer-readable storage medium may be any usable medium accessible by the computer, or a data storage device, for example, a server or a data center, integrating one or more usable media. The available medium may include a magnetic medium (for example, a floppy disk, a hard disk, or a magnetic tape), an optical medium (for example, a DVD), or a semiconductor medium (for example, a solid state disk).

A person of ordinary skill in the art may understand that all or some of the procedures of the methods in embodiments may be implemented by a computer program instructing related hardware. The program may be stored in a computer-readable storage medium. When the program is executed, the procedures in the method embodiments may be performed. The storage medium includes: any medium that can store program code, such as a ROM, a RAM, a magnetic disk, and an optical disk.

In conclusion, the foregoing descriptions are merely embodiments of the technical solutions of this application, but are not intended to limit the protection scope of this application. Any modification, equivalent replacement, or improvement made according to the disclosure of this application shall fall within the protection scope of this application.

**Claims**

1. A method for processing a CPU frequency, wherein the method comprises:

   running, by an electronic device, at a first CPU frequency when N tasks run in a foreground, wherein N is an integer greater than 1;
   switching, by the electronic device, M tasks in the N tasks to a background for running, wherein M is an integer greater than 0 and less than N; and
   running, by the electronic device, at a second CPU frequency in a mixed task running scenario in which the M tasks run in the background and N-M tasks run in the foreground, wherein the second CPU frequency is less than the first CPU frequency.

2. The method according to claim 1, wherein in the mixed task running scenario in which the M tasks run in the background and the N-M tasks run in the foreground, the method further comprises:

   obtaining, by the electronic device, first grouping information of each task and a first load of each task in the N tasks, wherein the N-M tasks belong to a first group, the M tasks belong to a second group, a task comprised in the first group is a task running in the foreground, and a task comprised in the second group is a task running in the background;

calculating, by the electronic device, a CPU load based on the first grouping information of each task and the first load of each task, to obtain a first CPU load; and

determining, by the electronic device, the second CPU frequency based on the first CPU load.

3. The method according to claim 2, wherein the calculating, by the electronic device, a CPU load based on the first grouping information of each task and the first load of each task in the N tasks, to obtain a first CPU load comprises:

obtaining, by the electronic device, a load impact factor of each task based on the first grouping information of each task, wherein each group corresponds to one load impact factor, and each task corresponds to a load impact factor of a group to which each task belongs; and

calculating, by the electronic device, the first CPU load based on the load impact factor of each task and the first load of each task.

4. The method according to any one of claims 1 to 3, wherein after the running, by the electronic device, at a second CPU frequency in a mixed task running scenario in which the M tasks run in a background and N-M tasks run in the foreground, the method further comprises:

obtaining, by the electronic device, a first response delay and/or first power consumption of the electronic device; and

if the first response delay and/or the first power consumption do/does not meet a requirement for a preset quality of service QoS specification, re-determining, by the electronic device, a CPU frequency, to obtain a third CPU frequency.

5. The method according to claim 4, wherein the re-determining, by the electronic device, a CPU frequency, to obtain a third CPU frequency comprises:

obtaining, by the electronic device, second grouping information of each task and a second load of each task in the N tasks, wherein the N-M tasks belong to the first group, the M tasks belong to the second group, the task comprised in the first group is the task running in the foreground, the task comprised in the second group is the task running in the background, each group corresponds to the one load impact factor, and each task in the N tasks corresponds to the load impact factor of the group to which each task belongs;

adjusting, by the electronic device, the load impact factor corresponding to the first group and/or the second group;

obtaining, by the electronic device, an adjusted load impact factor of each task based on the second grouping information of each task;

calculating, by the electronic device, the CPU load based on the adjusted load impact factor of each task and the second load of each task, to obtain a second CPU load; and

determining, by the electronic device, the third CPU frequency based on the second CPU load.

6. The method according to claim 5, wherein if the first response delay is greater than a response delay required by the QoS specification, the electronic device specifically performs the following operations:

increasing, by the electronic device, the load impact factor corresponding to the first group and/or the second group;

obtaining, by the electronic device, an increased load impact factor of each task based on the second grouping information of each task;

calculating, by the electronic device, the second CPU load based on the increased load impact factor of each task and the second load of each task; and

determining, by the electronic device, the third CPU frequency based on the second CPU load, wherein the third CPU frequency is greater than the second CPU frequency and less than the first CPU frequency.

7. The method according to claim 5, wherein if the first power consumption is greater than power consumption required by the QoS specification, the electronic device specifically performs the following operations:

reducing, by the electronic device, the load impact factor corresponding to the first group and/or the second group;

obtaining, by the electronic device, a reduced load impact factor of each task based on the second grouping information of each task;

calculating, by the electronic device, the second CPU load based on the reduced load impact factor of each task and the second load of each task; and

determining, by the electronic device, the third CPU frequency based on the second CPU load, wherein the third CPU frequency is less than the second CPU frequency.

8. The method according to claim 7, wherein when the first power consumption is greater than the power consumption required by the QoS specification and the first response delay satisfies a response delay required by the QoS specification, the electronic device reduces the load impact factor corresponding to the first group and/or the second group.

9. The method according to any one of claims 2, 3, and 5 to 8, wherein the load impact factor corresponding to the second group is less than the load impact factor corresponding to the first group.

10. The method according to any one of claims 1 to 9, wherein the running, by an electronic device, N tasks in a foreground comprises:

displaying, by the electronic device, a user interface of the N tasks on a display in a split screen manner or a floating window manner.

11. An electronic device, comprising: a touchscreen, one or more processors, and one or more memories, wherein the one or more processors are coupled to the touchscreen and the one or more memories, the one or more memories are configured to store computer program code, the computer program code comprises computer instructions, and when the one or more processors execute the computer instructions, the electronic device is enabled to perform the method according to any one of claims 1 to 10.

12. A chip system, wherein the chip system is used in an electronic device, the chip system comprises one or more processors, and the processor is configured to invoke computer instructions so that the electronic device performs the method according to any one of claims 1 to 10.

13. A computer-readable storage medium, comprising instructions, wherein when the instructions are run on an electronic device, the electronic device is enabled to perform the method according to any one of claims 1 to 10.

14. A computer program product comprising instructions, wherein when the computer program product is run on an electronic device, the electronic device is enabled to perform the method according to any one of claims 1 to 10.

Electronic device 100

Antenna 1          Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 – N [194]

Camera lenses 1 – N [193]

Indicator [192]

Motor [191]

Key [190]

Internal memory [121]

SIM card interfaces 1 – N [195]

External memory interface [120]

USB interface [130]

Charging input

Processor [110]

Charging management module [140]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 1

S201: An electronic device recognizes a task scenario

S202: The electronic device obtains corresponding scenario characteristic information based on the recognized task scenario, and obtains information about a preset QoS specification

S203: The electronic device calculates a CPU load based on the obtained scenario characteristic information and the information about the QoS specification, and implements frequency regulation based on the CPU load obtained through calculation

FIG. 2

Preset QoS specification of a task scenario

Target requirement needing to be met

Information about a group to which the task scenario belongs, and load information of the task scenario

Input

Load decision-making module

Output

CPU load

FIG. 3

FIG. 4

FIG. 5

FIG. 6

Software architecture of a
frequency regulation module

| CPU frequency stats (CPUFreq stats) module | CPU frequency government (CPUFreq Governor) module |

CPU frequency core (CPUFreq core) module

CPU frequency driver
(CPUFreq driver) module

Frequency regulation
operation function
(clk/regulator)

FIG. 6A

| Scenario recognition module | Scenario perception module | Load decision-making module |
|---|---|---|

Detect a change in information of an input reader and information of four components

Send a recognizable running task scenario

Obtain scenario characteristic information of a task scenario and information about a preset QoS specification

Send the obtained scenario characteristic information of the task scenario and information about the preset QoS specification

Calculate a CPU load based on the obtained information

Detect whether the preset QoS specification is satisfied

Send a notification that the preset QoS specification is not satisfied

Recalculate the CPU load by adjusting a load impact factor

FIG. 7

CPU load

CPU load obtained through
calculation in an existing
solution

(1)

A

B

(2)

CPU load obtained
through calculation in
this application

O

Load of a task running in
a background

FIG. 8

CPU
frequency

N tasks run
in a
foreground

M tasks in the N
tasks are switched
to a background for
running

$f_1$

$f_2$

O

Time

Frequency
regulation
window 1

Frequency
regulation
window 2

Frequency
regulation
window 3

Frequency
regulation
moment 1

Frequency
regulation
moment 2

FIG. 9

Interface 1 of windows in which a plurality of tasks are run

Display

Display a user
interface of a
first task

Split screen
boundary

Display a user
interface of a
second task

**8:00**

FIG. 10

**Interface 2 of windows in which a plurality of tasks are run**

Display

Display a user interface of a first task

Display a user interface of a second task in a small window

8:00

FIG. 11

**Interface 3 of windows in which a plurality of tasks are run**

A display displays a main interface

Display a user interface of a first task

Display a user interface of a second task

FIG. 12

M tasks in the N tasks are switched to a background for running

N tasks run in foreground

CPU frequency

$f_1$

$f_2$

$f_3$

O

Time

Frequency regulation window 1

Frequency regulation window 2

Frequency regulation window 3

Frequency regulation moment 1

Frequency regulation moment 2

FIG. 13

## INTERNATIONAL SEARCH REPORT

International application No.

**PCT/CN2024/079184**

**A. CLASSIFICATION OF SUBJECT MATTER**

G06F1/3293(2019.01)i

According to International Patent Classification (IPC) or to both national classification and IPC

**B. FIELDS SEARCHED**

Minimum documentation searched (classification system followed by classification symbols)

IPC:G06F1/-,G06F9/-

Documentation searched other than minimum documentation to the extent that such documents are included in the fields searched

Electronic data base consulted during the international search (name of data base and, where practicable, search terms used)

CNTXT, ENTXTC, DWPI, CNKI: 前台, 后台, 频率, 改变, 变频, 降频, 升频, 应用, 程序, 任务, 因子, 负载, 功耗, 节省, 节能, 服务质量, foreground, background, frequency, chang+, frequency, down, up, app, application, program, task, factor, load+, power consump+, sav+, energy, sav+, QoS

**C. DOCUMENTS CONSIDERED TO BE RELEVANT**

| Category* | Citation of document, with indication, where appropriate, of the relevant passages | Relevant to claim No. |
|---|---|---|
| X | CN 114968540 A (HUAWEI TECHNOLOGIES CO., LTD.) 30 August 2022 (2022-08-30) description, paragraphs [0086]-[0091], and figure 3 | 1-3, 9-14 |
| Y | CN 114968540 A (HUAWEI TECHNOLOGIES CO., LTD.) 30 August 2022 (2022-08-30) description, paragraphs [0086]-[0091], and figure 3 | 4 |
| Y | CN 104423529 A (HUAWEI TECHNOLOGIES CO., LTD.) 18 March 2015 (2015-03-18) description, paragraphs [0071]-[0083] | 4 |
| A | CN 115617512 A (GUANGDONG MINGCHUANG SOFTWARE TECHNOLOGY CO., LTD.) 17 January 2023 (2023-01-17) entire document | 1-14 |
| A | US 2021303054 A1 (INTEL CORP.) 30 September 2021 (2021-09-30) entire document | 1-14 |
| A | US 2014365808 A1 (QUALCOMM INNOVATION CENTER INC.) 11 December 2014 (2014-12-11) entire document | 1-14 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2024** | **24 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/079184**

| C. | DOCUMENTS CONSIDERED TO BE RELEVANT | | |
|---|---|---|---|
| Category* | Citation of document, with indication, where appropriate, of the relevant passages | | Relevant to claim No. |
| A | US 2022404888 A1 (MICROSOFT TECHNOLOGY LICENSING L.L.C.) 22 December 2022 (2022-12-22) <br>     entire document | | 1-14 |
| A | WO 2022196889 A1 (SAMSUNG ELECTRONICS CO., LTD.) 22 September 2022 (2022-09-22) <br>     entire document | | 1-14 |

Form PCT/ISA/210 (second sheet) (July 2022)

## INTERNATIONAL SEARCH REPORT
### Information on patent family members

International application No.

**PCT/CN2024/079184**

| Patent document cited in search report | | | Publication date (day/month/year) | Patent family member(s) | | | Publication date (day/month/year) |
|---|---|---|---|---|---|---|---|
| CN | 114968540 | A | 30 August 2022 | None | | | |
| CN | 104423529 | A | 18 March 2015 | None | | | |
| CN | 115617512 | A | 17 January 2023 | None | | | |
| US | 2021303054 | A1 | 30 September 2021 | DE | 102020134491 | A1 | 30 September 2021 |
| | | | | US | 11422616 | B2 | 23 August 2022 |
| | | | | US | 2024045490 | A1 | 08 February 2024 |
| | | | | US | 2022374066 | A1 | 24 November 2022 |
| | | | | US | 11775047 | B2 | 03 October 2023 |
| US | 2014365808 | A1 | 11 December 2014 | US | 9400518 | B2 | 26 July 2016 |
| US | 2022404888 | A1 | 22 December 2022 | None | | | |
| WO | 2022196889 | A1 | 22 September 2022 | KR | 20220131023 | A | 27 September 2022 |

Form PCT/ISA/210 (patent family annex) (July 2022)

**EP 4 614 280 A1**

**Patent documents cited in the description**

- CN 202310619203